# EUROPEAN PATENT SPECIFICATION

(11) **EP 2 724 959 B1**
(45) Date of publication and mention of the grant of the patent: **10.02.2016**
(21) Application number: 13190065.6
(22) Date of filing: 24.10.2013
(51) Int. Cl.: B65D 88/02, B65D 90/00

(54) **Cargo transport unit**
Frachtbeförderungseinheit
Unité de transport de fret

(30) Priority: 26.10.2012 FI 20126116
(43) Date of publication of application: 30.04.2014
(73) Proprietor: Langh Group Oy Ab, 21500 Piikkiö (FI)
(72) Inventor: Langh, Hans, 21500 Piikkiö (FI)
(74) Representative: Kolster Oy Ab

(56) References cited:
- WO-A1-00/69756
- WO-A1-2009/118459
- JP-U- S6 062 487
- JP-Y1- S4 911 220
- US-A- 3 386 600

## Description

### Background of the invention

The invention relates to a cargo transport unit, such as a container or a cassette framework, the transport unit comprising a bottom structure following the shape of a rectangle, a first longitudinal side oriented upwards from the bottom structure and a second longitudinal side opposite to the first longitudinal side, a first end oriented upwards from the bottom structure and a second end opposite to the first end, and an upper structure following the shape of a rectangle, whereby the bottom structure comprises in its every corner a fastening device for fastening the cargo transport unit to a base, such as a deck of a ship, and the upper structure comprises in its every corner a fastening member, and in the middle of both longitudinal edges of the upper structure are provided two adjacent fastening members for receiving the bottom structure of another cargo transport unit and for fastening it to the upper structure of the cargo transport unit in order to stack the cargo transport units on top of one another.

Such a cargo transport unit is known from JP S60 62487 U. Such a cargo transport unit in the form of a container is also known from US 7591386 B2. Fastening members provided in the corners of the upper structure of the container as well as in the middle of the edges of the upper structure enable one or more containers to be fastened on top of the container. For instance, it is possible to fasten, aligned, two containers having the length of 6 m (20 feet) on top of a container having the length of 12 m (40 feet). The fastening members are of the type of conventional fastening members used for containers, so-called corner castings. This known container may be hoisted by using for the hoist a rectangular hoisting framework attached to a hoist, whereby hoisting means provided in the corners of the hoisting framework are during hoisting fastened to the fastening members provided in the corners of the container. From WO 2009/118459 A1 a transport framework is known whose upper structure is provided with fastening members similar to those mentioned above.

A hoisting framework suitable for hoisting containers is known from US 7905528 B2. The force necessary for hoisting is distributed among four fastening members in the corners. The fastening devices are not always uniformly loaded: e.g. one fastening member may be subjected to more load than others during hoisting. The standard fastening members used for containers are dimensioned to withstand a certain load, and it is important that during hoisting no fastening member is overloaded. In order to make the cargo faster to handle, it would sometimes be necessary to hoist a container with a very heavy load, e.g. a container loaded with a load of 100 t, but this is not possible since the hoisting would strain the fastening members provided in the upper corners of the container too much. In such a case, the cargo has to be transferred/transported in another way; for instance, the container has to be hoisted aboard a ship empty or only partially loaded, the container being loaded only when aboard a ship. Typically, this applies to large containers accommodating a large volume of cargo, but it may also apply to smaller, heavily loaded containers. JP S49 11220 Y1 discloses an adjustment arrangement in the upper ends of the vertical posts of a cargo transport unit. The arrangement is, in order to make it easy to position a hoisting frame on the cargo transport unit, adapted to keep - in case the cargo transport unit flexes, owing to external forces, so that the horizontal distance between its mutual vertical posts change - the horizontal distance between mutual fastening members in the upper ends of the vertical posts of the cargo transport unit constant, so that the distance corresponds to the horizontal distance between the mutual hoisting means of a hoisting framework.

A hoisting framework is also known which, in addition to hoisting means provided in the corners, comprises adjacent hoisting means in the middle of its both longitudinal edge. Such a hoisting framework may usually be used for simultaneously hoisting two aligned containers having the length of 6 m (20 feet). If such a hoisting framework is used for hoisting a large known container, e.g. a container having the length of 12 m (40 feet), such that the adjacent hoisting members of the hoisting framework are fastened to the adjacent fastening members provided in the middle of the upper structure of the container for the purpose of hoisting at eight points, the container must not be very heavily loaded, e.g. loaded with a load heavier than 100 t. This is because the adjacent fastening members provided in the middle of the edges of the upper structure of the container are in practice loaded very ununiformly. Loads are ununiformly distributed due to reasons related to manufacturing technology (manufacturing tolerances), making adjacent fastening members reside at a slightly different height (i.e. one of the adjacent fastening members resides slightly lower than the other) and, furthermore, the adjacent hoisting means of the hoisting frame do not - again due to reasons related to manufacturing technology - reside at exactly the same height, either. The one of the adjacent fastening devices subjected to a hoisting force at the beginning of the hoisting is much more heavily loaded than the fastening member adjacent thereto, which at the beginning of the hoisting is subjected to no load at all. Thus, it is impossible by means of the known solutions to distribute the hoisting force anywhere near uniformly among the adjacent fastening and hoisting members, which is why the highest permissible hoisting capacity of all fastening members cannot be utilized. The differences in height of only couple of millimetres between the adjacent fastening members owing to manufacturing tolerances cause a huge loading unbalance in the adjacent fastening members, which is why the more heavily loaded fastening member of the adjacent fastening members easily becomes overloaded and damaged if its load has been calculated erroneously, i.e. by assuming that the adjacent fastening members are subjected to equal loads during hoisting. In view of the above, a very heavily loaded known container does not withstand to be hoisted by a known hoisting frame with an eight-point-hoisting option, either, which makes the cargo contained therein slow to handle and transfer.

### Brief description of the invention

An object of the invention is thus to provide a novel cargo transport framework, e.g. a container or a transport cassette which, even very heavily loaded, may be hoisted using a hoisting frame which, during hoisting, is fastened to all eight fastening members provided in the upper structure of the cargo transport framework even if these in their type, strength and dimensions were fastening members ordinarily used for containers, i.e. so-called corner castings.

The object of the invention is achieved by the cargo transport unit which is characterized in that it comprises an adjustment arrangement for changing a mutual height position of the adjacent fastening members provided on both longitudinal edges of the upper structure such that they are uniformly and in equal amount loaded when the cargo transport unit is hoisted by a hoisting frame at eight hoisting points that, in addition to the fastening members provided in the corners of the upper structure of the cargo transport unit, are formed by the adjacent fastening members provided in the middle of the longitudinal edges of the cargo transport unit.

The invention is based on the idea of providing the cargo transport unit with an adjustment arrangement enabling the height position of the adjacent fastening members provided in the middle of the upper structure of the cargo transport unit to be changed, i.e. adjusted, such that they are in equal amount loaded when the cargo transport unit is hoisted by the hoisting frame provided, in addition to the hoisting means in the corner, with adjacent hoisting means fastened to the adjacent fastening device of the cargo transport unit. The need for adjustment is small, in practice few millimetres only, i.e. the adjustment is fine adjustment of height.

Preferably, the adjustment arrangement provided on both edges of the upper structure comprises a leveler fastened to an upper part of the cargo transport unit and comprising a rocking member arranged to swing on a bearing, the adjacent fastening members being fastened to the rocking member. Owing to the rocking member included in the leveler, the adjacent fastening members automatically settle, when the cargo transport framework is hoisted by the adjacent fastening members (and by the fastening members in the corners), at a height position enabling them to be loaded in equal amount.

Preferably, the leveler is fastened to an upper end of a vertical support provided on the side of the cargo transport unit, the vertical support extending from the upper structure all the way to the bottom structure. Such a structure applies an upwards oriented force to the middle of the bottom structure of the cargo transport unit, reducing the tendency of the bottom structure to bend during hoisting, whereby the bottom structure may achieve the necessary strength without having to dimension the bottom structure extremely heavy and extremely string.

Preferably, the fastening members are fastening members of the type used in standard containers.

Preferably, the dimensions of the cargo transfer unit correspond to the dimensions of a standard container, in which case the cargo transport unit may be hoisted by hoisting frames of conventional type.

Preferred embodiments of the cargo transport unit according to the invention are disclosed in the attached claims 2 to 10.

The greatest advantages of the cargo transport unit according to the invention are that it may be hoisted very heavily loaded by using for the hoist hoisting frames that are similar to the known ones and without having to dimension the cargo transport framework particularly strong and heavy. During hoisting, the cargo transport unit is loaded uniformly, enabling conventional fastening members that are used in the corners of conventional containers to be used as the hoisting members. Owing to the fact that the cargo transport unit may be hoisted even extremely heavily loaded, it may be for instance hoisted loaded from a port to a ship, making the loading of the ship faster. Similarly, unloading the cargo from the ship becomes faster when the container, heavily loaded, may be unloaded from the ship by hoisting and, when desired, transferred it to be transported by a land vehicle without having in the meantime to unload the cargo contained in the cargo transport unit. The invention thus makes the cargo transport unit and the load contained therein faster to handle and transfer.

### Brief description of the figures

The invention is now described in closer detail by means of its two preferred embodiments and with reference to the attached drawing, in which
Figures 1 and 2 show a first embodiment according to the invention, i.e. a container as viewed from above and the side,
Figure 3 is a side view showing a hoisting framework for hoisting the container of Figure 1,
Figure 4 illustrates a section along line IV - IV of Figure 2,
Figure 5 illustrates a section along line V - V of Figure 1,
Figure 6 shows a section along section line VI - VI of Figure 4,
Figures 7 and 8 illustrate a leveler to be used in a container, as viewed from opposite sides and enlarged with respect to what is shown in Figure 1,
Figures 9 and 10 show a second embodiment of the invention, i.e. a cassette framework as viewed from the side and above,
Figure 11 shows the cassette framework of Figures 9 and 10 as viewed from an end,
Figure 12 is an enlarged view of the leveler shown in Figure 9, and
Figure 13 shows a section along section line XIII - XIII of Figure 12.

### Detailed description of the invention

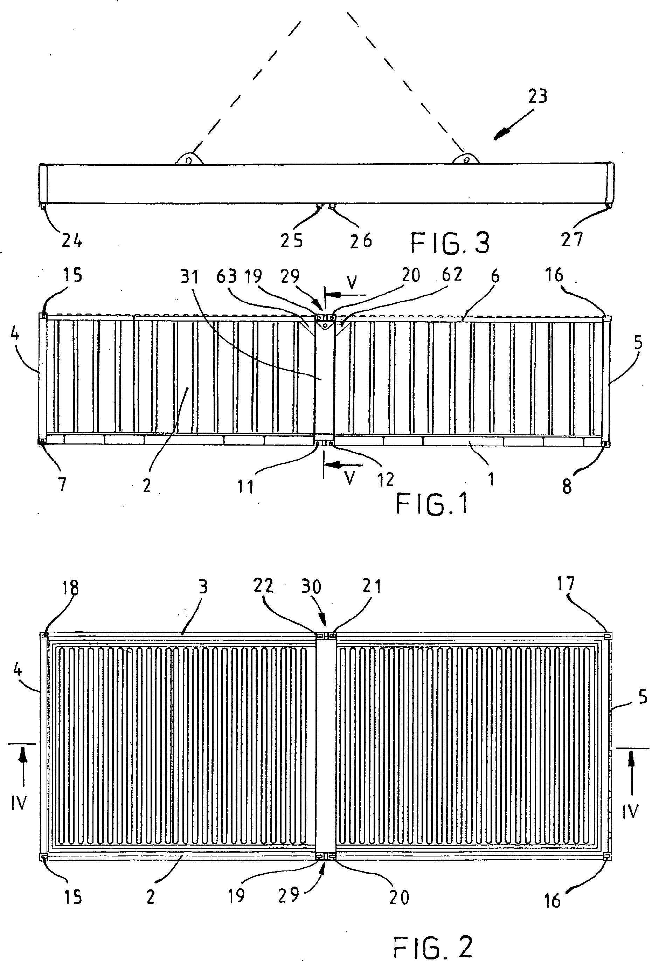

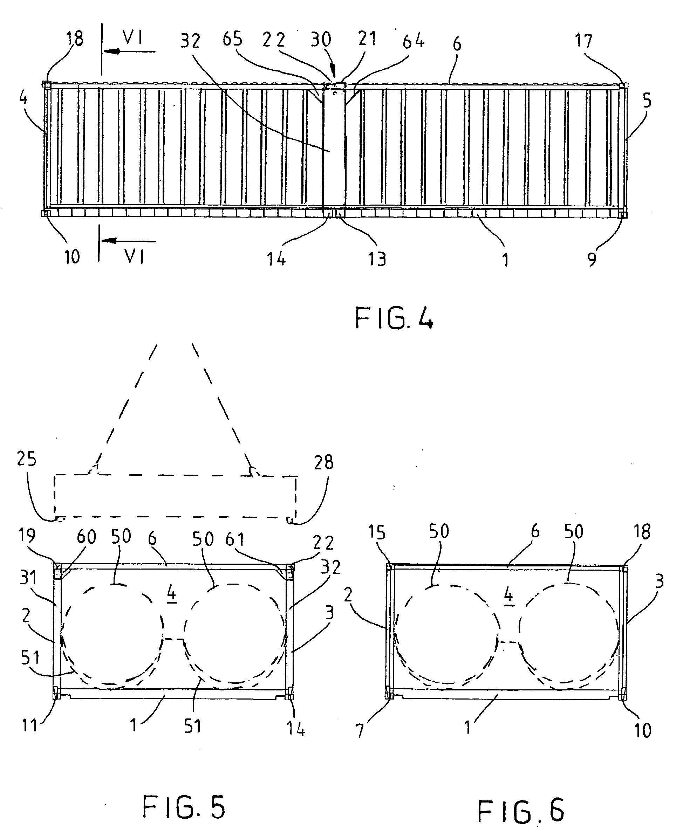

Figures 1, 2, 5, and 6 show a container having the length of 12 m (40 feet) and comprising a bottom structure 1, sides 2, 3 oriented upwards from the bottom structure, ends 4, 5, and an upper structure 6. The container may be a conventional container or a container with a special structure for transporting a heavy cylindrical load, e.g. heavy rolls, such as paper rolls or steel coils. In the latter case, the container may comprise a chute 51 extending from an end 4 to an end 5, or several chutes for supporting the cylindrical load 50 (in Figures 5 and 6 the chute 51 and the cylindrical load 50 are illustrated in broken line). The chutes for supporting the rolls may alternatively be transversely located in the container.

Every corner of the bottom structure 1 is provided with a fastening device 7 to 10 and, in addition, adjacent fastening devices 11, 12 and 13, 14 are provided in the middle of both longitudinal edges of the bottom structure. The fastening devices 7 to 14 are for fastening the container to a base, e.g. a deck of a ship, and are similar in type to so-called corner castings that are used in conventional containers for fastening them to the base, e.g. a cargo space of a ship (a deck in the cargo space).

Every corner of the upper structure 6 is provided with a fastening member 15 to 18 and, in addition, adjacent fastening members 19, 20 and 21, 22 are provided in the middle of both longitudinal edges of the upper structure. The fastening members 15 to 18 may receive another container (not shown) having the length of 12 m (40 feet), which settles on top of the upper structure 6. Alternatively, the fastening members 15 to 22 enable two containers (not shown) having the length of 6 m (20 feet) to be received, the containers settling on top of the upper structure 6. The fastening members 15 to 22 are of the same type, so-called corner castings, as those used in conventional containers.

In the container according to the invention, the fastening members 15 to 22 form the hoisting points for hoisting the container by a rectangular hoisting framework according to Figure 3. In such a case, hoisting means 24 to 28 of the hoisting framework 23 are fastened to the container fastening members 15, 19, 20, 16, and 22, respectively. Figure 3 only shows the hoisting means 24 to 27 of one side of the hoisting framework 23, but the opposite side of the hoisting framework is correspondingly provided with four hoisting means (of which only the hoisting means 28 is shown in Figure 5) that are fastened to the container fastening members 18, 22, 21, 17 (the hoisting means 28 is fastened to the fastening member 22).

In Figures 1, 2, and 4 reference numbers 29 and 30 indicate levelers (balancers) which are included in an adjustment arrangement and owing to which the adjacent hoisting means 25 to 26 and 28 of the hoisting framework 23 fastened to the container fastening members 19, 20 and 21, 22 load the container fastening members 19 to 22 uniformly when the container is hoisted (when, naturally, the hoisting means 25, 26 are fastened to the fastening members 19, 20). The levelers 29, 30 are fastened to the opposite sides 2, 3 of the container. Owing to the levelers 29, 30, a container which is loaded with a one-hundred-ton load and which, when empty, weighs about ten tons, may be hoisted by the hoisting framework 23 according to Figure 3 by using conventional standard fastening members as the fastening members 15 to 22. During hoisting, the container fastening members 15 to 22 and the hoisting means 24 to 28 of the hoisting framework 23 are loaded quite uniformly, and the fastening members 19, 20 and 21, 22 in particular are loaded uniformly.

The levelers 29, 30 are arranged at an upper end of vertical supports 31, 32 provided on the sides 2, 3 of the container and arranged in the middle of the container. The supports 31, 32 are made of a steel profile having the shape of a rectangular, and they extend from the bottom structure 1 to an upper part of the container, close to the upper structure 6 of the container. Thus, the supports 31, 32 apply a hoisting force to the middle part of the bottom structure 1 when the container is hoisted by the fastening members 19 to 22, thus reducing the need to strengthen the middle part of the bottom structure.

It can be seen in Figure 5 that upper ends of the vertical supports 31, 32 provided in the middle of the sides 2, 3 of the container are supported on the upper structure 6 by corner supports 60, 61 that are located transversely in the container. It can be seen in Figures 1 and 4 that the upper ends of the vertical supports 31, 32 are also supported on the upper structure by supports 62, 63, 64, 65 that are in the longitudinal direction of the container.

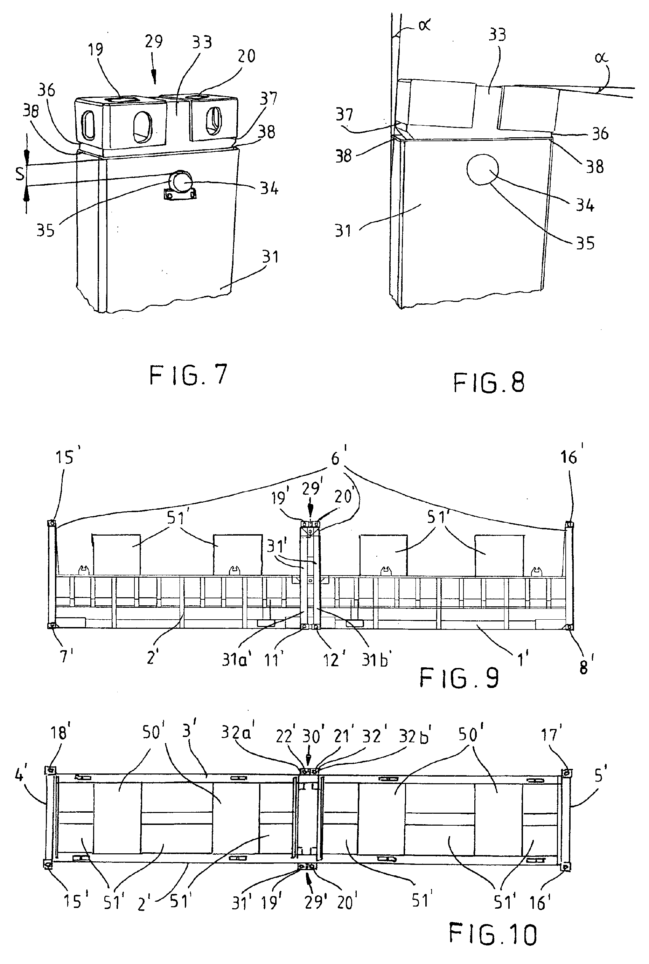

Figures 7 and 8 show the leveler 29 fastened to the upper end (or upper part) of the support 31 provided on the side 2 of the container, as viewed from inside the container and from outside the container, respectively. The leveler 29 comprises a rocking member 33 pivotally mounted to the support 31. Reference number 34 indicates an axle while reference number 35 indicates a bearing provided in the support. The rocking member 33 is thus arranged to swing on the bearing 35 in which the axle 34 is arranged. As can be seen in the figure, the rocking member 33 may settle at an angle α in relation to the longitudinal direction of the support 31. When the container is hoisted, the fastening members 19 and 20 automatically settle into a position and at a height position where they become loaded in equal amount. For instance, if the support 31 is in the container not completely perpendicular to the upper structure 6 of the container, which typically is the situation due to reasons related to manufacturing technology, owing to the pivoting support of the rocking member 33 its upper plane settles at an angle α in relation to the longitudinal direction of the support 31 so that the fastening members 19, 20 become loaded in equal amount and are at almost or exactly the same height. The angle α may vary. In practice, it will usually suffice that the mutual height of the fastening members 19, 20 may be adjusted by 0.5 to 5 mm, in which case the angle α is few degrees only. Such an adjustment range is usually sufficient for compensating for the tolerances caused by the manufacturing technology, and suffices to provide the necessary height adjustment so that the fastening members 19, 20 settle automatically at a height enabling them to be loaded uniformly (in equal amount) when the container is hoisted.

The pivotal mounting of the rocking member 33 enables the rocking member to be rotated in both directions in relation to a vertical axis (not shown). The rotation of the rocking member 33 is, as is understood from the above description, stepless, which, in turn, enables the height to be adjusted steplessly. Although it is usually sufficient that the rocking member 33 is turned very little to compensate for deviations caused by the manufacturing technology, the rocking member 33 is arranged to be rotatable enough for the rotation to make the fastening members 19, 20 placeable at a height difference of at least 2 mm and preferably at least 5 mm from one another, in which case it is possible to compensate even for larger tolerances caused by the manufacture of the container in the height position of the fastening members. Preferably, the rocking member 33 is pivotally mounted such that it enables the fastening members 19, 20 to be placed at a height difference of 10 mm from one another, in which case it is possible to cover the largest height adjustment necessary in practice.

The rocking member 33 is a triangular piece whose lower end settles inside the support 31, thus being supported by the support 31. Alternatively, the lower end of the rocking member 33 may have the shape of a sector of a circle or it may otherwise be made to resemble a wedge in order for the lower end not to collide with an inner wall of the support 31 to prevent the desired rotation of the rocking member. The rocking member 33 comprises stoppers in the form of stopping shoulders 36, 37 which, by settling against an upper edge 38 of the support 31, prevent the rocking member from rotating over a determined angle, e.g. 10 degrees. The rocking member 33 must not be too inclined and must not differ from the horizontal plane too much when the hoisting framework 23 is placed on top of it, since this would make the hoisting framework more difficult or even impossible to place on top of the container into a lifting position. In view of the above, the stoppers are arranged to limit the inclination of the upper plane of the rocking member 33 such that the rocking member does not incline more than 30 degrees in relation to the horizontal plane. This corresponds, if the standard dimensioning of containers is followed, whereby the distance between the adjacent fastening members when viewed in the horizontal direction is about 270 mm, to a height difference of about 160 mm in adjacent fastening members. Preferably, the angle α is at most 10 degrees, and more preferably about 3 degrees, in order for the containers of 20 feet (6 m) to be possibly stacked on top of the container to be provided with the necessary support by the fastening members 19 to 22 and the vertical supports 31, 32 below them.

Since a great force is directed to the upper part of the support 31 when the container is hoisted, a distance S between the axle 34 and the upper edge of the support has to be sufficient. The distance S may preferably be 50 to 100 mm and the diameter of the axle 34 may be 70 mm, for instance. Naturally, it is to be taken care of that the axle 34 is prevented from unintentionally ejecting out of its bearing. A person skilled in the art knows how to arrange appropriate stop means, so they are not discussed in closer detail herein.

The described adjustment arrangement for changing the height position of the adjacent fastening members 19, 20 of the container may also be called a fine adjustment arrangement since it is arranged to adjust the height position of the adjacent fastening members only little.

Figures 9 to 11 show a second embodiment of the invention. Figures 9 to 11 use the same reference numbers as Figures 1, 2, and 6 for the corresponding components. Figures 9 to 11 show a cassette framework enabling steel coils 50' to be transported. Preferably, the length of the cassette framework corresponds to the length of a standard container, preferably being about 12 m (40 feet). In order to provide support to the coils 50' during transportation of the cassette framework, the cassette framework comprises a chute 51' extending from an end 4' to and end 5'. It is feasible that the cassette framework is alternatively provided with transverse chutes for coils.

The embodiment of Figures 9 to 11 differs from the embodiment of Figures 1, 2, and 6 mostly in that it is not a conventional closed container but an open cassette framework which is easy to load by a hoist. It is possible to fasten on top of the cassette framework a cover (not shown) which leaves fastening members 15' to 22' provided in the upper structure of the cassette framework free.

In the embodiment of Figures 9 to 11, vertical supports 31', 32' provided in the middle of the sides 2', 3' of the cassette framework comprise two parallel profiles 31 a', 31 b', 32a', 32b'. Figures 9 to 11 clearly show only the support 31', including its profiles 31a', 31b', of the side 2' while the support of the opposite side 3', including its corresponding profiles 32a', 32b', remains unexposed in the figure; the support, however, being indicated in Figures 9 and 10 by reference number 32'.

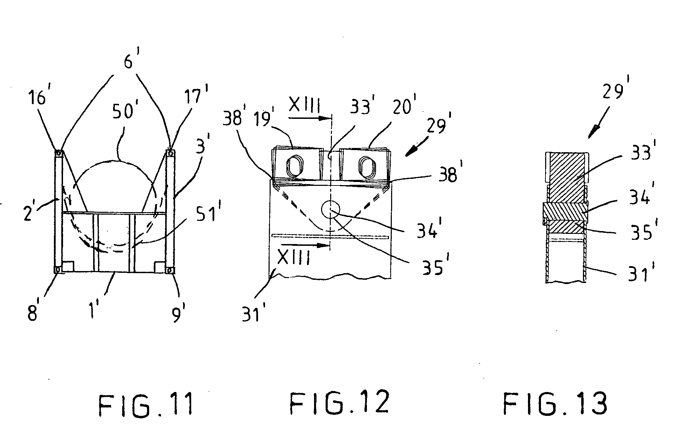

Figures 12 and 13 show a leveler 29' fastened to the upper end of the support 31' (or upper part of the support 31') and to the upper part of the cassette framework. The operation and structure of the leveler 29' are quite similar to those of the leveler 29 of Figures 7 and 8. Thus, the rocking member 33' of the leveler 29' may be rotated about the axle 34' so that the fastening members 19', 20' provided at the upper end of the leveler settle at slightly different height levels, which is illustrated in Figure 12 by drawing the rocking member at three mutually slightly different angles in relation to the vertical support 31'. The adjustment arrangement comprises a similar leveler 30' fastened to the upper part of the vertical support 32' of the side 3' of the cassette framework (cf. Figure 10). The leveler 29' of Figures 12 and 13 differs from the leveler 29 of Figures 7 and 8 such that the stoppers for preventing the rocking member 33' from turning (swinging) too much are formed by the opposite sides of the rocking member that are supported by the opposite inner edges 38' of the upper end of the support 31'.

As can be seen in Figures 9 to 11, the upper structure of the cargo transport unit is not necessarily formed by a closed roof (cf. Figures 1, 2, and 4) but the upper structure may be defined by the upper ends of the vertical supports of the cargo transport unit, which are provided with the above-described fastening members 15' to 22'. Similarly, the sides of the cargo transport unit do not have to be formed by closed sides (cf. Figures 1, 2, and 4) but the sides may be defined by the vertical supports only that are provided in the sides of the cargo transport unit.

In the above, the invention is described by means of two examples, wherefore it is noted that the details of the invention may be implemented in many different ways within the scope of the attached claims. Consequently, the shape and dimensions of the cargo transport unit may vary. Its width and height may differ from the dimensions of a standard container and particularly such that its width is e.g. two times the width of the standard container. Typically, the height may correspond to the height of the standard container, but may be higher or lower than the standard container, e.g. 1½ times the height of the standard container. In the dimensioning of the cargo transport unit it is, however, reasonable to follow the dimensioning used in standard containers. Instead of the above-described, automatically operating mechanical adjustment arrangement implemented by a rocking member, it is feasible that an electrical or hydraulic adjustment arrangement is used for changing the mutual height position of the adjacent fastening members of the upper structure and for providing the necessary fine adjustment of height.

## Claims

1. A cargo transport unit, such as a container or a cassette framework, the transport unit comprising a bottom structure (1, 1') following the shape of a rectangle, a first longitudinal side (2, 2') oriented upwards from the bottom structure and a second longitudinal side (3, 3') opposite to the first longitudinal side, a first end (4, 4') oriented upwards from the bottom structure and a second end (5, 5') opposite to the first end, and an upper structure (6, 6') following the shape of a rectangle, whereby the bottom structure (1, 1') comprises in its every corner a fastening device (7 to 10, 7' to 9') for fastening the cargo transport unit to a base, such as a deck of a ship, and the upper structure (6, 6') comprises in its every corner a fastening member (15 to 18, 15' to 18'), and in the middle of both longitudinal edges of the upper structure (6, 6') are provided two adjacent fastening members (19, 20 and 21, 22, 19', 20' and 21', 22') for receiving the bottom structure of another cargo transport unit and for fastening it to the upper structure (6, 6') of the cargo transport unit in order to stack the cargo transport units on top of one another, **characterized in that** the cargo transport unit comprises an adjustment arrangement for changing a mutual height position of the adjacent fastening members (19, 20 and 21, 22, 19', 20' and 21', 22') provided on both longitudinal edges of the upper structure (6, 6') such that they are uniformly and in equal amount loaded when the cargo transport unit is hoisted by a hoisting frame at eight hoisting points that, in addition to the fastening members (15 to 18, 15' to 18') provided in the corners of the upper structure (6, 6') of the cargo transport unit, are formed by the adjacent fastening members (19, 20 and 21, 22, 19', 20' and 21', 22') provided in the middle of the longitudinal edges of the cargo transport unit.

2. A cargo transport unit as claimed in claim 1, **characterized in that** the adjustment arrangement provided on both edges of the upper structure (6, 6') comprises a leveler (29, 30, 29', 30') fastened to an upper part of the cargo transport unit and comprising a rocking member (33, 33') arranged to swing on a bearing (35, 35'), the adjacent fastening members (19, 20 and 21, 22,19', 20' and 21', 22') being fastened to the rocking member.

3. A cargo transport unit as claimed in claim 2, **characterized in that** the leveler (29, 30, 29', 30') is fastened to an upper end of a vertical support (31, 32, 31', 32') provided on the side (2, 3, 2', 3') of the cargo transport unit, the vertical support extending from the upper structure (6, 6') all the way to the bottom structure (1, 1').

4. A cargo transport unit as claimed in claim 3, **characterized in that** the support (31, 32, 31', 32') is formed by a steel profile.

5. A cargo transport unit as claimed in any one of claims 2 to 4, **characterized in that** the rocking member (33, 33') is arranged to be rotatable in an amount enabling a height position of its adjacent fastening members (19, 20 and 21, 22, 19', 20' and 21', 22') to be changed by at least 2 mm.

6. A cargo transport unit as claimed in claim 5, **characterized in that** the rocking member (33, 33') is arranged to be rotatable in an amount enabling a height position of its adjacent fastening members (19, 20 and 21, 22,19', 20' and 21', 22') to be changed by at least 5 mm.

7. A cargo transport unit as claimed in claim 5 or 6, **characterized in that** the rocking member (33, 33') comprises stoppers (36) arranged to limit inclination of an upper plane of the rocking member to an angle of at most 30 degrees in relation to a horizontal plane.

8. A cargo transport unit as claimed in any one of the preceding claims, **characterized in that** the fastening members (15 to 18, 15' to 18') in the corners and the adjacent fastening members (19, 20 and 21, 22, 19', 20' and 21', 22') are of the type used in standard containers.

9. A cargo transport unit as claimed in any one of the preceding claims, **characterized in that** its dimensions correspond to dimensions of a standard container.

10. A cargo transport unit as claimed in any one of the preceding claims 1 to 9, **characterized in that** it comprises at least one chute (51, 51') for receiving a cylindrical load (50, 50').

## Patentansprüche

1. Frachtbeförderungseinheit wie ein Container oder ein Kassettenrahmen, welche Beförderungseinheit eine der Form eines Rechtecks folgende Bodenkonstruktion (1, 1'), eine von der Bodenkonstruktion nach oben gerichtete erste Längsseite (2, 2') und eine der ersten Längsseite gegenüberliegende zweite Längsseite (3, 3'), ein von der Bodenkonstruktion nach oben gerichtetes erstes Ende (4, 4') und ein dem ersten Ende gegenüberliegendes zweites Ende (5, 5') und eine der Form eines Rechtecks folgende obere Konstruktion (6, 6') aufweist, wobei die Bodenkonstruktion (1, 1') an jedem ihrer Ecken eine Befestigungsvorrichtung (7 bis 10, 7' bis 9') zur Befestigung der Frachtbeförderungseinheit an einer Unterlage wie einem Deck eines Schiffes aufweist und die obere Konstruktion (6, 6') an jedem ihrer Ecken ein Befestigungselement (15 bis 18, 15' bis 18') aufweist und in der Mitte der beiden Längskanten der oberen Konstruktion (6, 6') zwei nebeneinander liegende Befestigungselemente (19, 20 und 21, 22, 19', 20' und 21', 22') vorhanden sind, die die Bodenkonstruktion einer anderen Frachtbeförderungseinheit aufnehmen und sie an der oberen Konstruktion (6, 6') der Frachtbeförderungseinheit befestigen, um die Frachtbeförderungseinheiten aufeinander zu stapeln, **dadurch gekennzeichnet, dass** die Frachtbeförderungseinheit eine Regeleinrichtung aufweist, mit der die gegenseitige Höhenposition der auf beiden Längskanten der oberen Konstruktion (6, 6') vorgesehenen nebeneinander liegenden Befestigungselemente (19, 20 und 21, 22, 19', 20' und 21', 22') geändert wird, so dass sie gleichmäßig und gleich viel belastet werden, wenn die Frachtbeförderungseinheit von einem Hubrahmen an acht Hubpunkten gehoben wird, die sowohl aus den an den Ecken der oberen Konstruktion (6, 6') der Frachtbeförderungseinheit vorgesehenen Befestigungselementen (15 bis 18, 15' bis 18') als auch aus den in der Mitte der Längskanten der Frachtbeförderungseinheit vorgesehenen nebeneinander liegenden Befestigungselementen (19, 20 und 21, 22, 19', 20' und 21', 22') besteht.

2. Frachtbeförderungseinheit nach Patentanspruch 1, **dadurch gekennzeichnet, dass** die auf beiden Kanten der oberen Konstruktion (6, 6') vorgesehene Regeleinrichtung einen Ausgleicher (29, 30, 29', 30') aufweist, der an einem oberen Teil der Frachtbeförderungseinheit befestigt ist und ein Schaukelstück (33, 33') aufweist, das angeordnet ist, sich auf einem Lager (35, 35') zu drehen, wobei die nebeneinander liegenden Befestigungselemente (19, 20 und 21, 22, 19', 20' und 21', 22') am Schaukelstück befestigt sind.

3. Frachtbeförderungseinheit nach Patentanspruch 2, **dadurch gekennzeichnet, dass** der Ausgleicher (29, 30, 29', 30') an einem oberen Ende einer auf der Seite (2, 3, 2', 3') der Frachtbeförderungseinheit vorgesehenen vertikalen Stütze (31, 32, 31', 32') befestigt ist, wobei sich die vertikale Stütze von der oberen Konstruktion (6, 6') bis hin zur Bodenkonstruktion (1, 1') erstreckt.

4. Frachtbeförderungseinheit nach Patentanspruch 3, **dadurch gekennzeichnet, dass** die Stütze (31, 32, 31', 32') aus einem Stahlprofil besteht.

5. Frachtbeförderungseinheit nach einem der Patentansprüche 2 bis 4, **dadurch gekennzeichnet, dass** das Schaukelstück (33, 33') angeordnet ist, in solchem Maße drehbar zu sein, dass eine Höhenposition seiner nebeneinander liegenden Befestigungselemente (19, 20 und 21, 22, 19', 20' und 21', 22'), um zumindest 2 mm geändert werden kann.

6. Frachtbeförderungseinheit nach Patentanspruch 5, **dadurch gekennzeichnet, dass** das Schaukelstück (33, 33') angeordnet ist, in solchem Maße drehbar zu sein, dass eine Höhenposition seiner nebeneinander liegenden Befestigungselemente (19, 20 und 21, 22, 19', 20' und 21', 22') um zumindest 5 mm geändert werden kann.

7. Frachtbeförderungseinheit nach Patentanspruch 5 oder 6, **dadurch gekennzeichnet, dass** das Schaukelstück (33, 33') Anschläge (36) aufweist, die angeordnet sind, die Neigung einer oberen Ebene des Schaukelstücks auf einen Winkel von höchstens 30 Grad zu einer horizontalen Ebene zu beschränken.

8. Frachtbeförderungseinheit nach einem der vorhergehenden Patentansprüche, **dadurch gekennzeichnet, dass** die Befestigungselemente (15 bis 18, 15' bis 18') an den Ecken und die nebeneinander liegenden Befestigungselemente (19, 20 und 21, 22, 19', 20' und 21', 22') von gleicher Art wie in standardmäßigen Containern sind.

9. Frachtbeförderungseinheit nach einem der vorhergehenden Patentansprüche, **dadurch gekennzeichnet, dass** ihre Dimensionen den Dimensionen eines standardmäßigen Containers entsprechen.

10. Frachtbeförderungseinheit nach einem der vorhergehenden Patentansprüche 1 bis 9, **dadurch gekennzeichnet, dass** sie zumindest eine Rinne (51, 51') zum Aufnehmen einer zylindrischen Last (50, 50') aufweist.

## Revendications

1. Unité de transport de fret, tel qu'un conteneur ou un bâti de cassette, l'unité de transport comprenant une structure inférieure (1, 1') suivant la forme d'un rectangle, un premier côté longitudinal (2, 2') orienté vers le haut à partir de la structure inférieure et un second côté longitudinal (3, 3') opposé au premier côté longitudinal, une première extrémité (4, 4') orientée vers le haut à partir de la structure inférieure et une seconde extrémité (5, 5') opposée à la première extrémité et une structure supérieure (6, 6') suivant la forme d'un rectangle, dans laquelle la structure inférieure (1, 1') comprend, dans chacun de ses coins, un dispositif de fixation (7 à 10, 7' à 9') pour fixer l'unité de transport de fret à une base, tel qu'un pont d'un bateau, et la structure supérieure (6, 6') comprend, dans chacun de ses coins, un élément de fixation (15 à 18, 15' à 18') et au milieu des deux bords longitudinaux de la structure supérieure (6, 6'), on prévoit deux éléments de fixation (19, 20 et 21, 22, 19', 20' et 21', 22') adjacents pour recevoir la structure inférieure d'une autre unité de transport de fret et pour la fixer sur la structure supérieure (6, 6') de l'unité de transport de fret afin d'empiler les unités de transport de fret les unes au-dessus des autres, **caractérisée en ce que** l'unité de transport de fret comprend un agencement d'ajustement pour modifier une position de hauteur mutuelle des éléments de fixation adjacents (19, 20 et 21, 22, 19', 20' et 21', 22') prévus sur les deux bords longitudinaux de la structure supérieure (6, 6') de sorte qu'ils sont uniformes et chargés en quantité égale lorsque l'unité de transport de fret est levée par un bâti de levage à huit points de levage qui, en plus des éléments de fixation (15 à 18, 15' à 18') prévus dans les coins de la structure supérieure (6, 6') de l'unité de transport de fret, sont formés par les éléments de fixation adjacents (19, 20 et 21, 22, 19', 20' et 21', 22') prévus au milieu des bords longitudinaux de l'unité de transport de fret.

2. Unité de transport de fret selon la revendication 1, **caractérisée en ce que** l'agencement d'ajustement prévu sur les deux bords de la structure supérieure (6, 6') comprend un niveleur (29, 30, 29', 30') fixé sur une partie supérieure de l'unité de transport de fret et comprenant un élément basculant (33, 33') agencé pour osciller sur un palier (35, 35'), les éléments de fixation adjacents (19, 20 et 21, 22, 19', 20' et 21', 22') étant fixés sur l'élément basculant.

3. Unité de transport de fret selon la revendication 2, **caractérisée en ce que** le niveleur (29, 30, 29', 30') est fixé sur une extrémité supérieure d'un support vertical (31, 32, 31', 32') prévu sur le côté (2, 3, 2', 3') de l'unité de transport de fret, le support vertical s'étendant à partir de la structure supérieure (6, 6') jusqu'à la structure inférieure (1, 1').

4. Unité de transport de fret selon la revendication 3, **caractérisée en ce que** le support (31, 32, 31', 32') est formé par un profil en acier.

5. Unité de transport de fret selon l'une des revendications 2 à 4, **caractérisée en ce que** l'élément basculant (33, 33') est agencé pour pouvoir tourner selon une quantité permettant de modifier une position de hauteur de ses éléments de fixation adjacents (19, 20 et 21, 22, 19', 20' et 21', 22') d'au moins 2 mm.

6. Unité de transport de fret selon la revendication 5, **caractérisée en ce que** l'élément basculant (33, 33') est agencé pour pouvoir tourner selon une quantité permettant de modifier une position de hauteur de ses éléments de fixation adjacents (19, 20 et 21, 22, 19', 20' et 21', 22') d'au moins 5 mm.

7. Unité de transport de fret selon la revendication 5 ou 6, **caractérisée en ce que** l'élément basculant (33, 33') comprend des butées (36) agencées pour limiter l'inclinaison d'un plan supérieur de l'élément basculant à un angle de 30 degrés maximum par rapport à un plan horizontal.

8. Unité de transport de fret selon l'une quelconque des revendications précédentes, **caractérisée en ce que** les éléments de fixation (15 à 18, 15' à 18') dans les coins et les éléments de fixation adjacents (19, 20 et 21, 22, 19', 20' et 21', 22') sont du type utilisés dans les conteneurs standard.

9. Unité de transport de fret selon l'une quelconque des revendications précédentes, **caractérisée en ce que** ses dimensions correspondent aux dimensions d'un conteneur standard.

10. Unité de transport de fret selon l'une des revendications 1 à 9, **caractérisée en ce qu'**elle comprend au moins une goulotte (51, 51') pour recevoir une charge cylindrique (50, 50').
